# DEMANDE DE BREVET EUROPEEN

(11) **EP 1 072 366 A1**
(43) Date de publication de la demande: **31.01.2001**
(21) Numéro de dépôt: 99810662.9
(22) Date de dépôt: 23.07.1999
(51) Int. Cl.: B25J 17/02, B25J 19/06

(54) **Dispositif transporteur**

(71) Demandeur: Demaurex, Marc-Olivier, 1093 La Conversion (CH); Demaurex, Pascal, 1052 Le Mont-sur-Lausanne (CH)
(72) Inventeur: Demaurex, Marc-Olivier, 1093 La Conversion (CH)
(74) Mandataire: Ganguillet, Cyril

(57) **Abrégé**

Sur les piliers 13 de l'élément de base fixe 1 sont montés les trois bras 4 en forme d'Y pivotant autour des articulations 51 et 52. Ils sont commandés par les tiges de manoeuvre 24 articulées sur les ergots 25. Ils portent à l'extrémité de leur flèche 4c chacun un axe de liaison 54 à rotules 15 sur lesquelles les cupules des barres 5a et 5b des avant-bras 5 sont serrées par les ressorts 46. Une alimentation en air comprimé 43 maintient sous pression le conduit circulaire 41 raccordé dans les piliers 13 aux tourillons des articulations 52 et par conséquent à l'espace interne des bras 4 et des axes de liaison 54. Tout défaut de contact entre une cupule 45 et la rotule 15 correspondante entraîne une chute de pression dans le circuit de contrôle. Celle-ci est détectée par le pressostat 42 situé à l'entrée du circuit. Un avertisseur, une alarme, une commande de blocage, etc. peuvent alors être enclenchées.

## Description

La présente invention a pour objet un dispositif transporteur, notamment robot industriel, comportant des membres reliant un élément mobile à un élément de base et commandés de manière à déplacer l'élément mobile dans l'espace en le maintenant parallèle à lui-même, chaque membre comprenant un actionneur comportant une partie fixe et une partie mobile, la partie fixe de l'actionneur étant solidaire de l'élément de base, et sa partie mobile étant reliée à l'élément mobile par l'intermédiaire de deux barres rigides articulées à leurs extrémités sur des axes de liaison associés eux-mêmes l'un à la partie mobile de l'actionneur et l'autre à l'élément mobile.

Des dispositifs de ce genre sont déjà connus notamment par le brevet européen 0250470 et par le brevet américain 4,976,582. On sait qu'ils permettent de déplacer très rapidement et de manière sûre, des objets de petites dimensions. Ils peuvent être réalisés dans des constructions très précises et pourvus de moteurs dont les mouvements sont programmables ce qui permet une large automatisation des fonctions de ces robots.

Les expériences pratiques faites ont toutefois montré que la réalisation de liaisons parfaitement fiables notamment entre les bras et les avant-bras pouvait présenter certaines difficultés lorsque les avant-bras sont constitués de deux barres rigides maintenues parallèles entre elles et assemblées sur des axes de liaison. Il subsiste des risques de décrochement intempestif d'une articulation, notamment lors de mouvements des membres comportant des accélérations rapides ou un choc. Dans le cas d'un tel décrochement, les actionneurs du robot, qui sont programmés, continuent leur travail, mais bien entendu le robot ne remplit plus sa tâche. Et, dans le cas où le robot concerné par l'incident fait partie d'une chaîne de travail, c'est le travail de toute la chaîne qui est perturbé. Il est par conséquent nécessaire de détecter un tel incident le plus rapidement possible.

Le but de la présente invention est de proposer une solution à ce problème.

Pour atteindre ce but le dispositif transporteur selon l'invention présente les caractéristiques de la revendication 1 ou de l'une ou l'autre des revendications 2 à 8.

On décrit ci-après une forme d'exécution de l'objet de l'invention donnée à titre d'exemple en se référant au dessin annexé dans lequel:
la figure 1 est une vue en perspective schématique d'un transporteur de l'art antérieur, le dispositif de l'invention étant d'une disposition semblable,
la figure 2 est une vue schématique en plan montrant les trois membres du transporteur dans la forme d'exécution prise comme exemple, ces membres étant rabattus dans un plan commun à l'élément de base disposé au centre, l'élément mobile n'étant pas représenté,
la figure 3 est une vue en plan de dessus de l'élément de base,
la figure 4 est une vue en coupe selon la ligne IV-IV de la figure 3 illustrant le pivotement des bras en Y sur l'élément de base et leur commande par des actionneurs,
la figure 5 est une vue en élévation partiellement coupée prise dans le sens de la flèche A de la figure 4 montrant un bras en Y,
la figure 6 est une vue en plan de dessous dans le sens de la flèche B de la figure 4, montrant le bras en Y de la figure 5, sans son axe de liaison,
la figure 7 est une vue en élévation également dans le sens de la flèche A de la figure 4 montrant l'extrémité de la flèche du bras en Y de la figure 5 avec son axe de liaison,
la figure 8 est une vue en coupe montrant l'avant-bras qui coopère avec l'axe de liaison de la figure 7,
les figures 9 et 10 sont des vues de détails montrant les deux articulations différentes des branches du bras en Y de la figure 5 sur deux piliers de l'élément de base,
la figure 11 est un schéma du circuit pneumatique de contrôle, et
les figures 12 à 14 sont des vues en perspectives schématiques de variantes de transporteurs pouvant être réalisés conformément à l'invention.

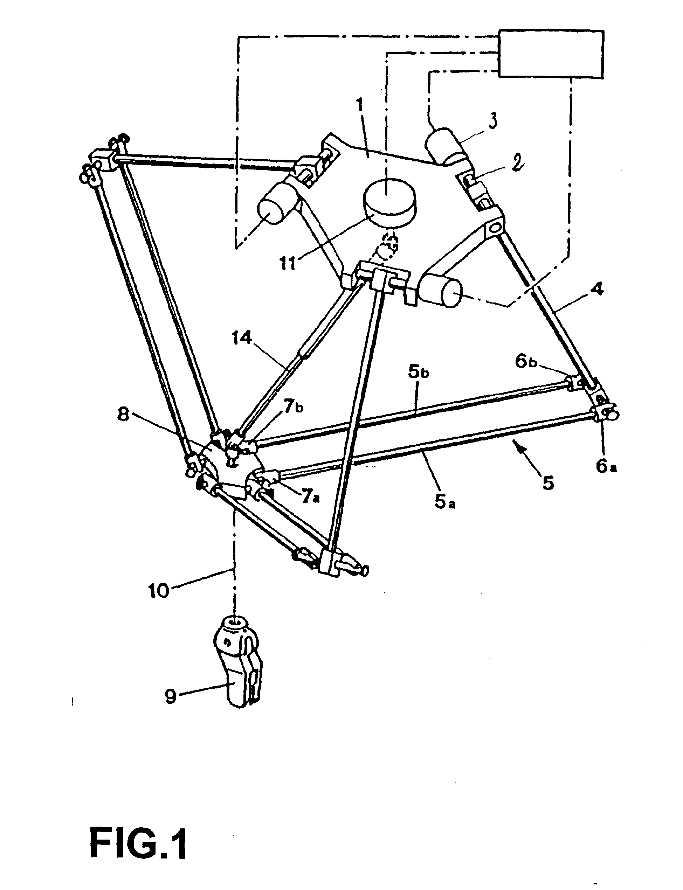

Le dispositif transporteur de l'art antérieur qui est représenté à la figure 1 comporte une structure générale permettant de déplacer un élément mobile 8 par rapport à un élément fixe 1 simplement au moyen de trois actionneurs qui commandent trois membres formés d'un bras 4 et d'un avant-bras 5. Ces constituants sont articulés l'un sur l'autre, le bras 4 étant articulé sur l'élément de base 1 et l'avant-bras 5 étant articulé sur le bras et sur l'élément mobile 8. Chaque bras 4 est formé d'une barre rigide tandis que les avant-bras sont formés chacun de deux barres 5a et 5b maintenues assemblées par des articulations 6a et 6b par rapport au bras 4 et par des articulations 7a et 7b sur l'élément mobile 8.

On sait que dans les dispositifs de l'art antérieur les articulations 6 et 7 peuvent comporter des cardans ou des liaisons à rotules montées sur des axes à liaison fixe ou variable par rapport à l'extrémité du bras ou par rapport à l'élément mobile.

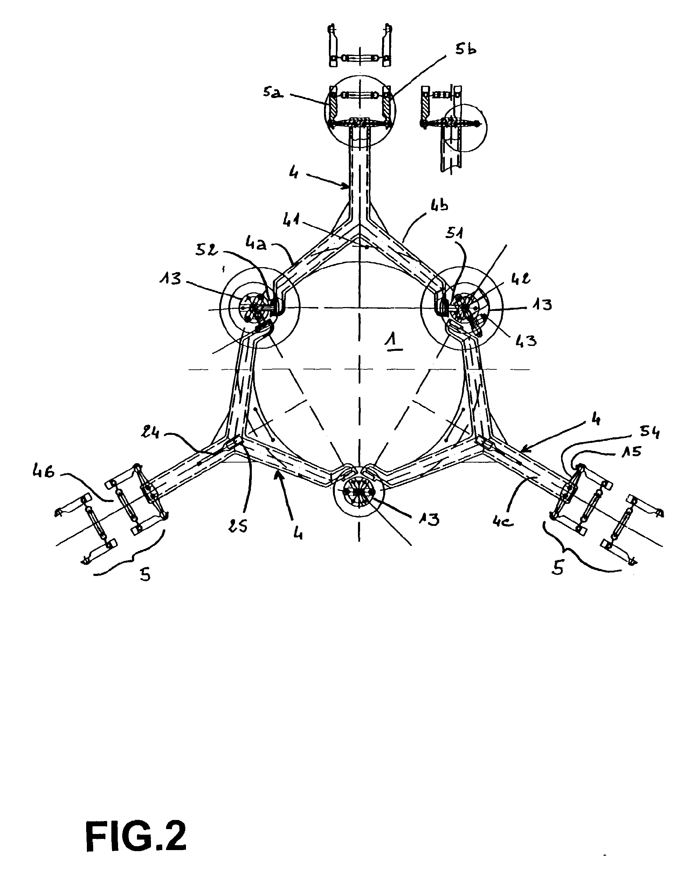

La forme d'exécution de l'invention que l'on va décrire maintenant présente une disposition analogue à ce que montre la figure 1, avec toutefois un certain nombre de différences qui apparaissent à la figure 2. De façon générale on voit à cette figure que les bras 4 présentent ici la forme de structures rigides en Y, creuses. Deux branches 4a et 4b aboutissent à des articulations 51 et 52 tandis que la flèche 4c de chaque bras en Y porte à son extrémité un axe de liaison 54 disposé transversalement et présentant deux rotules 15 à ses extrémités.

Les articulations 51 et 52 des branches 4a et 4b relient le bras 4 à deux piliers 13 qui font partie de l'élément de base 1. Comme deux articulations 51 et 52 appartenant à deux bras 4 différents relient ces branches à un même pilier 13, trois de ces piliers, situés (dans le cas de l'exemple représenté à la figure 2) aux sommets d'un triangle équilatéral assurent la liaison entre les bras et l'élément de base.

Quant aux avant-bras, chacun d'eux est constitué de deux barres 5a et 5b serrées par des ressorts 46 de manière que leurs extrémités soient appuyées contre les rotules 15, comme on le verra plus loin.

La liaison entre les avant-bras 5 et l'élément mobile 8 n'est pas représentée. Elle peut être conçue comme pour l'articulation du bras sur l'avant-bras c'est-à-dire au moyen de rotules solidaires d'un axe de liaison et sur lesquelles appuient des cupules des barres 5a et 5b.

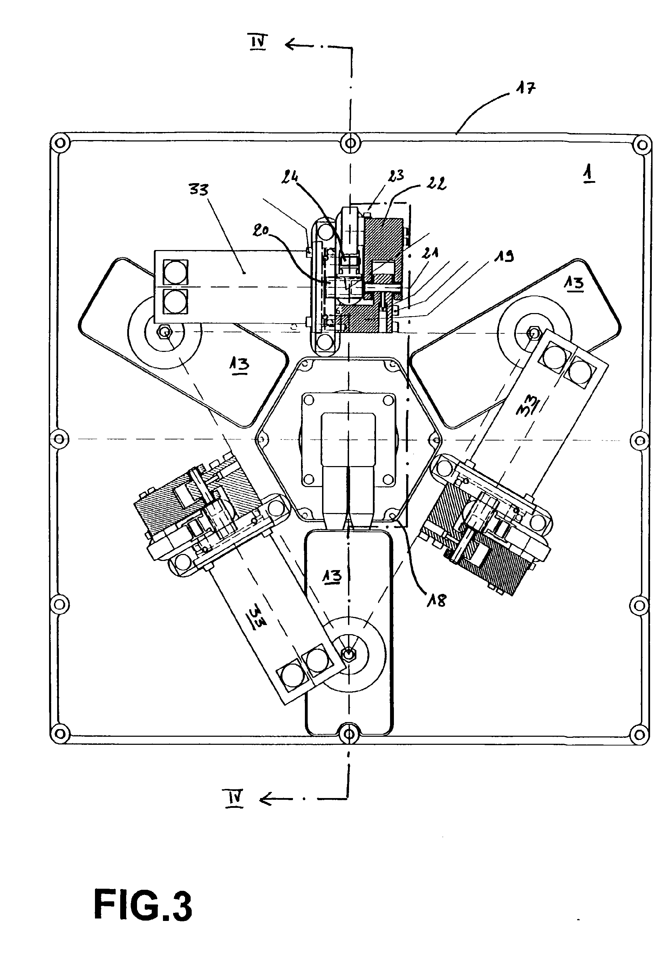

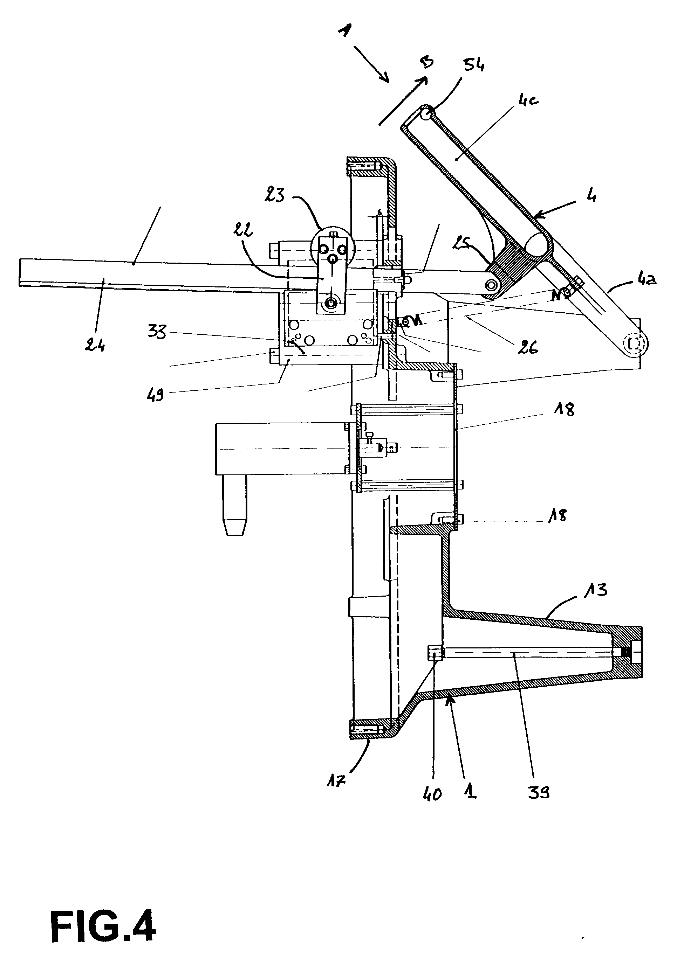

La commande synchronisée ou différenciée des bras 4 assure celle des avant-bras et par conséquent de l'élément mobile. Cette commande s'explique sur la base des figures 3 et 4. L'élément de base fixe 1 est représenté à la figure 3 vu de dessus. C'est une plaque moulée de forme carrée avec une paroi périphérique 17 et une ouverture centrale bordée par une paroi interne 18. Les piliers 13 sont des bossages creux de forme rectangulaire à leur base et tronconique à leur partie supérieure. Dans le cas de l'exemple des figures 3 et 4, ils sont disposés aux sommets d'un triangle équilatéral. A la figure 4 on voit le bras d'un des membres du transporteur et son articulation sur le pilier 13 situé à gauche en haut à la figure 3. Le bras 4 présente un ergot 25 saillant à l'emplacement où les deux branches 4a, 4b (voir figure 2) et la flèche 4c se rejoignent. Une tige de commande rectiligne 24, pourvue d'une crémaillère sur une face est articulée sur l'ergot 25 et sa crémaillère engrène dans un pignon 20 calé sur l'arbre de sortie d'un moteur 33 dont le corps est fixé sur une console 19 solidaire de la plaque 1. L'axe du moteur 33 s'étend horizontalement à la figure 3 c'est-à-dire qu'il est parallèle au plan de l'élément de base 1. En avant du pignon 20 la console 19 présente une partie proéminente dans laquelle est fixé un tourillon 21 coaxial au pignon 20 et sur lequel pivote un étrier 22 portant un galet 23. C'est ce galet qui guide la tige de commande 24 de telle sorte que la rotation du moteur 33 provoque un mouvement combiné de translation et de pivotement de la tige 24, faisant pivoter le bras 4 autour de l'axe commun de ses articulations sur les deux piliers 13 placés en haut à gauche et à droite à la figure 3. Afin de supprimer le jeu, le galet 23 comporte un ressort qui l'appuie en permanence contre la crémaillière.

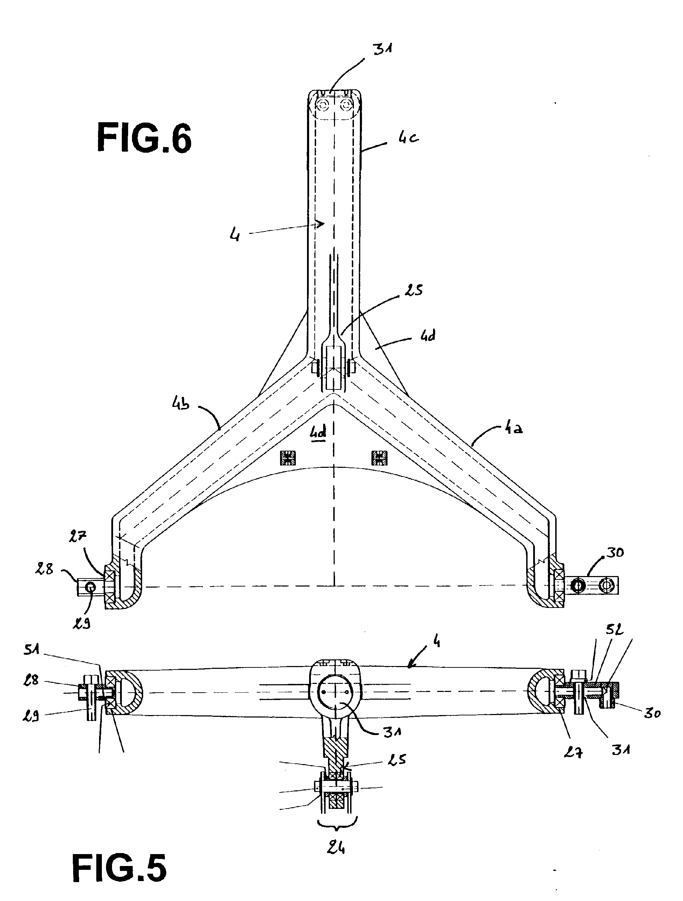

Les figures 5 et 6 montrent certains détails des bras 4 en particulier la disposition tubulaire des branches 4a, 4b et de la flèche 4c. Les ailerons 4d servent au renforcement de la structure, celui qui relie les branches 4a et 4b servant en outre de point d'ancrage pour deux ressorts 26 (figure 4) accrochés à la plaque 1 au voisinage de la paroi 18 sous l'axe de l'articulation du bras, pour l'équilibre du système.

Les deux branches 4a et 4b de chaque bras se terminent par une partie creuse hémisphérique ouverte vers l'extérieur et munie d'un palier étanche 27. Les axes de ces paliers sont confondus et définissent l'axe de pivotement du bras. Ils reçoivent l'extrémité intérieure de deux tourillons creux fixes 28 et 30 dont le tourillon 28 est borgne et le tourillon 30 coudé. Ce dernier est donc raccordé avec l'intérieur creux du bras 4 et forme l'articulation 52 intégrée au circuit de contrôle tandis que l'autre forme l'articulation 51 uniquement destinée à supporter le bras.

On voit encore à la figure 6 un écrou 31 qui ferme à son extrémité la flèche 4c du bras 4.

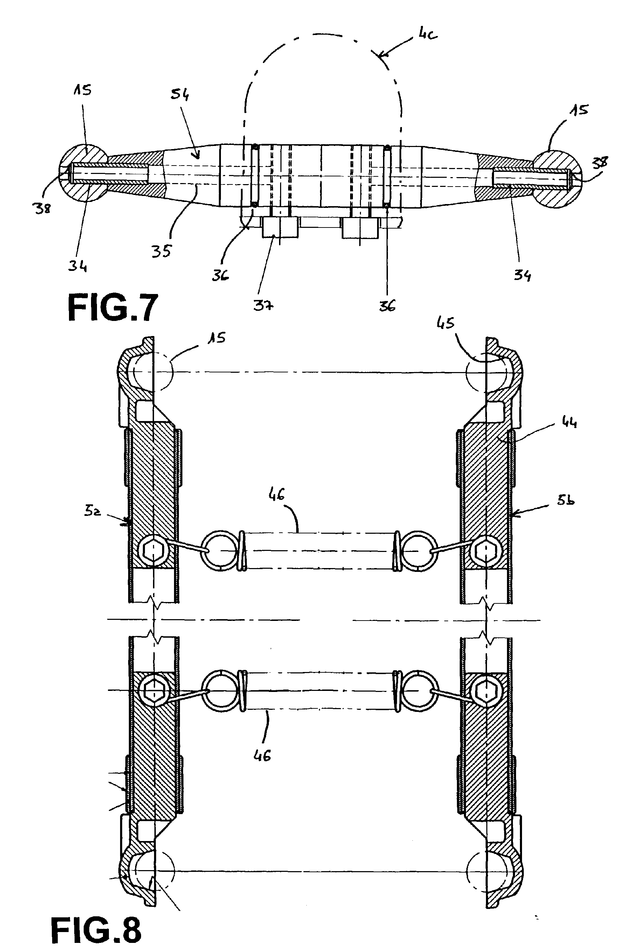

La figure 7 représente l'axe de liaison 54 engagé dans une forure cylindrique de la flèche 4c, fixé par des boulons 37 et assuré contre des fuites d'air comprimé par deux joints 36. Les rotules 15 déjà mentionnées sont emmanchées sur des goupilles creuses 34 engagées elles-mêmes dans des forures axiales de l'axe 54. Des orifices 38 assurent en permanence une communication entre la zone axiale de la surface extérieure des rotules 15 et l'intérieur des bras 4, de sorte que l'assemblage des avant-bras 5a et 5b sur les axes de liaison rend le circuit de contrôle opérationnel. En effet les barres rigides 5a et 5b constituant les avant-bras sont formées (figure 8) de segments de tubes portant à leurs extrémités des embouts 44 conformés de manière à présenter des cupules 45 à face interne tronconique. En outre des ressorts 46 tendent à rapprocher les barres l'une de l'autre.

En assemblant les avant-bras de manière que les rotules des axes de liaison soient coiffées par les cupules 45, il se produit un contact d'appui radial entre les flancs internes des cupules et la surface sphérique des rotules. Tant que ce contact existe, l'espace interne des bras 4 est fermé alors que si un décollement se produit entre une cupule et la rotule correspondante, une fuite d'air se manifeste.

On notera que les extrémités des barres 5a et 5b opposées à celles qui sont reliées aux axes de liaison 54 sont dans la forme d'exécution décrite également pourvues de cupules destinées à s'engager sur des rotules associées d'une manière non représentée à l'élément mobile 8.

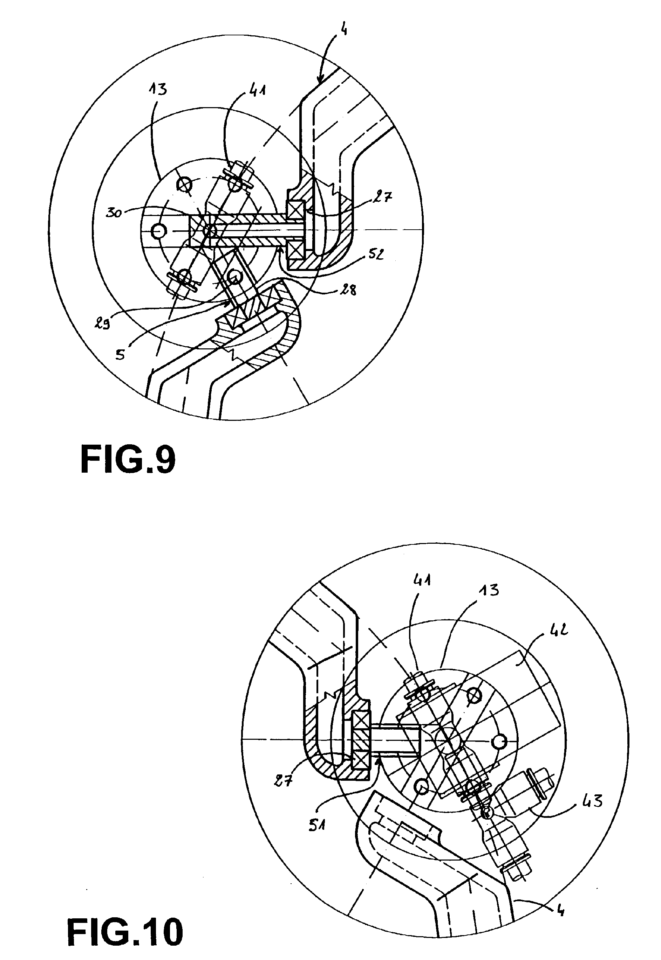

Revenant à la figure 4, il reste à décrire plus concrètement la structure du circuit de contrôle. Le pilier 13 vu en coupe à cette figure est équipé d'un tube de liaison 39 vissé dans un taraudage ménagé dans un épaulement sommital du pilier. A sa base ce tube porte un raccord 40 qui le relie à un tube de tracé circulaire 41 visible aux figures 9, 10 et 11. Les figures 9 et 10 montrent deux piliers 13 vus d'en haut avec l'épaulement sommital auquel se raccorde le tube 39. Deux rainures, l'une diamétrale et l'autre radiale sous un angle de 60 degrés (dans l'exemple représenté sur ces figures) par rapport à la première sont ménagées dans cet épaulement. Dans la rainure diamétrale vient se loger le tourillon tubulaire coudé 30 d'une articulation 52, le tourillon étant fixé par un boulon 31 tandis que dans la rainure radiale vient se loger le tourillon 28 de l'articulation 51 du bras voisin, fixé par un boulon 29 (figure 5).

A la figure 10 l'articulation 52 qui devrait s'engager dans la rainure diamètrale n'est pas représentée afin de laisser apparaître la partie du conduit 41 qui passe sous l'axe du pilier. On voit également à cette figure un pressostat 42 monté dans l'espace creux du pilier et le raccordement 43 du pressostat avec une alimentation d'air comprimé.

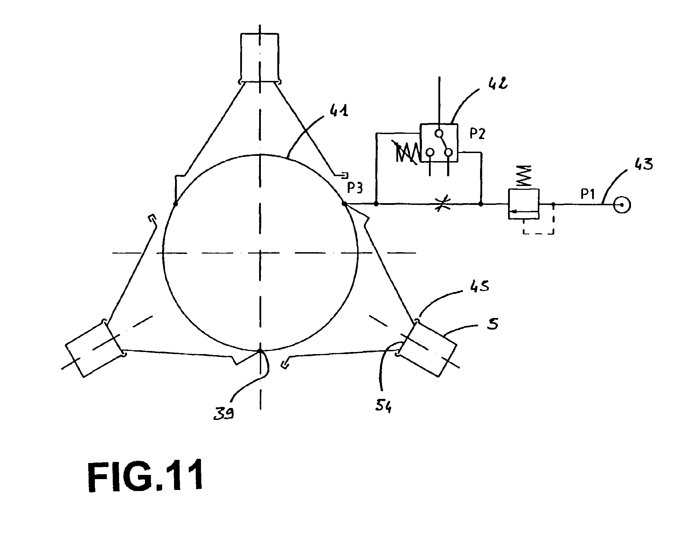

Finalement ces éléments apparaissent schématiquement à la figure 11, laquelle ne nécessite plus une description détaillée. Tant que toutes les rotules 15 des axes de liaison 54 sont en contact d'appui avec les faces internes des cupules 45, l'air comprimé entrant dans le circuit, réglé en pression par le régulateur d'entrée associé au pressostat 42 remplit le conduit fermé 41, les tubes 39 et, par les articulations 52, les espaces internes des bras 4, des axes de liaison et les espaces compris entre le fond des cupules et la ligne de contact entre ces dernières et les rotules. Toutefois, si par suite d'un à coup ou de tout autre événement fortuit, la barre de l'un des bras 5 s'écarte de son axe de liaison, l'orifice 38 de la rotule en cause se trouve en communication avec l'extérieur. La pression tombe dans le circuit. Le pressostat détecte cette variation de pression et émet un signal qui peut soit enclencher une alarme, ou un avertisseur, soit arrêter le fonctionnement du robot, soit provoquer une combinaison de ces réactions. Le cas échéant l'avertisseur peut aussi indiquer quelle rotule a une fuite.

Comme c'était le cas dans le transporteur de l'art antérieur représenté à la figure 1, l'élément fixe 1 et l'élément mobile 8 peuvent aussi être reliés directement par un système d'entraînement comportant un moteur 11, une barre télescopique 14 et un axe 10 actionnant un dispositif de préhension 9 afin de donner un degré de liberté supplémentaire au système.

Bien que l'on ait décrit ici une forme d'exécution dans laquelle les avant-bras sont formés de deux barres équipées de cupules qui sont serrées par ressorts sur les rotules des axes de liaison, la présence d'un système de contrôle et notamment d'un système de contrôle pneumatique peut aussi être prévue selon l'invention pour contrôler le fonctionnement d'un robot industriel ayant des membres travaillant en parallèle, dans lequel les avant-bras sont conçus différemment de ce qui a été décrit ci-dessus.

Ainsi, en particulier, les bras 4 en forme de Y peuvent être remplacés par des barres rectilignes creuses, chacune des barre portant à son extrémité un axe de liaison 54, la structure du circuit pneumatique de contrôle étant la même.

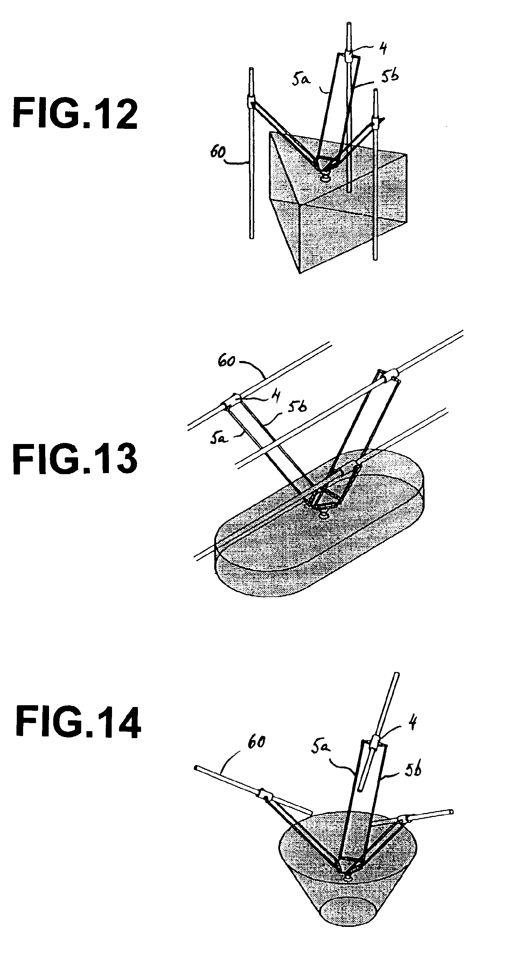

De même, un système de contrôle analogue peut être prévu, sur des transporteurs du type de ceux décrits ci-dessus, mais où les partie mobiles des actionneurs sont montées en translation par rapport aux partie fixes des dits actionneurs. Dans un tel cas, les bras 4 montés en rotation sur l'élément de base 1 sont remplacés par des systèmes linéaires, par exemple des systèmes à trois axes verticaux, comme sur la figure 12, à trois axes coplanaires, comme sur la figure 13, ou à trois axes concourants, comme sur la figure 14. Les barres 60 constituant les dits axes parallèles jouent alors le rôle des parties fixes des actionneurs, les parties mobiles 4 des dits actionneurs étant montées sur les dits axes 60 le long desquels elles se déplacent, par exemple sous l'effet d'un dispositif de commande à vis-écrou, à moteur linéaire ou à courroie crantée. Le circuit d'air sous pression comporte, comme précédemment, un conduit dans l'élément de base raccordé à une source d'air comprimé. Ce conduit est relié à chacune des extrémités des éléments de liaison 54, par exemple au moyen de tuyaux flexibles (non représentés sur les figures) agencés de façon à pouvoir suivre les déplacements des parties mobiles 4 des actionneurs.

## Revendications

1. Dispositif transporteur, notamment robot industriel, comportant des membres reliant un élément mobile (8) à un élément de base (1) et commandés de manière à déplacer l'élément mobile dans l'espace en le maintenant parallèle à lui-même, chaque membre comprenant un actionneur comportant une partie fixe (3) et une partie mobile (2, 4), la partie fixe de l'actionneur étant solidaire de l'élément de base (1), et sa partie mobile étant reliée à l'élément mobile (8) par l'intermédiaire de deux barres rigides (5a, 5b) articulées à leurs extrémités sur des axes de liaison (54) associés eux-mêmes l'un à la partie mobile (4) de l'actionneur et l'autre à l'élément mobile (8), caractérisé en ce que le dispositif est équipé d'un système de contrôle de fonctionnement (41, 42, 43) capable de détecter un défaut de liaison dans une articulation entre une barre rigide (5a, 5b) et l'axe de liaison (54) associé à la partie mobile (4) de l'actionneur correspondant.

2. Dispositif selon la revendication 1, caractérisé en ce que le système de contrôle est du type pneumatique.

3. Dispositif selon la revendication 2, caractérisé en ce que les axes de liaison solidaires des parties mobiles des actionneurs sont pourvus de rotules (15) à leurs extrémités et en ce que les barres rigides (5a, 5b) sont pourvues de cupules (45) au moins à une de leurs extrémités, ces cupules s'emboîtant sur les rotules et les barres étant serrées par des ressorts (46), et en ce que le système de contrôle comporte un circuit d'air sous pression (41) conduit dans les axes de liaison, normalement maintenu fermé par le contact des cupules sur les rotules des axes de liaison.

4. Dispositif selon la revendication 3, comportant trois membres (4, 5) reliant en parallèle l'élément de base (1) à l'élément mobile (8), caractérisé en ce que la partie mobile de chaque actionneur est constituée d'un bras (4) monté en rotation autour d'un axe (2) solidaire de la partie fixe de l'actionneur et en ce que le circuit d'air sous pression (41) est conduit dans les dits bras.

5. Dispositif selon la revendication précédente,
caractérisé en ce que les bras (4) sont en forme d'Y dont les branches sont articulées autour d'articulations coaxiales (51, 52) sur l'élément de base et dont la flèche porte l'axe de liaison, chaque bras étant commandé par une tige de manoeuvre (24) articulée sur la partie médiane du bras et pourvue d'une crémaillère qui engrène dans le pignon (20) d'un moteur de commande (33) monté sur l'élément de base.

6. Dispositif selon l'une des revendications 4 ou 5,
caractérisé en ce que ledit circuit d'air sous pression comporte, dans l'élément de base, un conduit (41) raccordé à une source d'air comprimé et relié à chacun des bras (4) à l'emplacement de sa liaison (28, 30) à l'élément de base, chaque bras comportant une âme intérieure qui forme un élément du dit circuit et s'étend jusqu'à l'axe de liaison (54) et à des orifices (38) débouchant dans la surface des rotules (15).

7. Dispositif selon les revendications 5 et 6,
caractérisé en ce que le circuit de contrôle comporte un conduit fixe (41) fermé sur lui-même, raccordé dans l'élément de base à l'une (52) des deux dites articulations de chaque bras sur l'élément de base.

8. Dispositif selon la revendication 7, caractérisé en ce que les articulations des branches des bras en Y sur l'élément de base comportent chacune un élément de palier étanche (27) solidaire d'une des dites branches et un segment tubulaire rigide (28, 30) formant tourillon de pivotement dans un des dits paliers et fixé à l'élément de base de manière à être raccordé au dit conduit fermé sur lui-même, un des dits segments tubulaires (28) étant toutefois obturé.

9. Dispositif selon la revendication 3, comportant trois membres (4, 5) reliant en parallèle l'élément de base (1) à l'élément mobile (8), caractérisé en ce que la partie mobile de chaque actionneur est montée en translation par rapport à la partie fixe (3) de l'actionneur.

10. Dispositif selon la revendication 9, caractérisé en ce que ledit circuit d'air sous pression comporte, dans l'élément de base, un conduit (41) raccordé à une source d'air comprimé et relié à chacun des axes de liaison (54) solidaires des parties mobiles des actionneurs.

11. Dispositif selon l'une des revendications précédentes, caractérisé en ce que le circuit de contrôle pneumatique comporte un pressostat et un régulateur de pression (42) situés à l'entrée du circuit, le pressostat étant agencé pour détecter une chute de pression due à un défaut de contact entre une cupule et la rotule correspondante et pour émettre un signal avertisseur ou de commande.
